# EUROPÄISCHE PATENTANMELDUNG

(11) **EP 4 394 193 A1**
(43) Veröffentlichungstag der Anmeldung: **03.07.2024**
(21) Anmeldenummer: 23150062.0
(22) Anmeldetag: 02.01.2023
(51) Int. Cl.: F16B 35/06, F16B 43/00, H01R 4/26, H01R 4/30, F16B 1/00

(54) **SCHRAUBE**

(71) Anmelder: ABC Umformtechnik GmbH & Co. KG, 58285 Gevelsberg (DE)
(72) Erfinder: Bertog, Andreas, 58285 Gevelsberg (DE); Lange, Andreas, 58285 Gevelsberg (DE)
(74) Vertreter: Schneider, Sascha

(57) **Zusammenfassung**

Schraube (1,1',1") zur Herstellung eines elektrischen Kontakts mit einem Kontaktierungsmaterial (9), sich erstreckend zwischen einem Kopf (2) und einem vorderen Ende (8) entlang einer Längsachse (L), aufweisend:
- eine Scheibe (3), wobei die Scheibe (3) am Kopf angeordnet ist, wobei die Scheibe eine dem Kopf (2) zugewandte Seite und eine dem vorderen Ende (8) zugewandte Seite aufweist,
- einen Schaft (6) mit einem Gewinde (7), wobei sich der Schaft (6) von der Scheibe (3) bis zum vorderen Ende (8) erstreckt,
wobei die Schraube (1,1',1") weiterhin aufweist:
- einen Dichtring (4), wobei der Dichtring (4) an der dem vorderen Ende (8) zugewandten Seite der Scheibe (2) angeordnet ist, und
- am Dichtring (4) angeordnete Schneidelemente (5,51,52) zur Durchtrennung eines isolierenden Materials (10).

## Beschreibung

Die Erfindung betrifft eine Schraube gemäß dem Patentanspruch 1.

Im Stand der Technik existieren Schrauben, die zur Kontaktierung mit einer elektrisch leitfähigen Schicht dienen. Allerdings weisen herkömmliche Schrauben erhebliche Nachteile auf, beispielsweise, dass herkömmliche Schrauben keine ausreichende Dichtigkeit zum Beispiel gegen von außen eindringendes Wasser und Ähnliches erzeugen können und dass kein ausreichender elektrischer Kontakt hergestellt werden kann, da beispielsweise isolierende Oberflächenschichten nicht durchdrungen werden können.

Es ist daher die Aufgabe der vorliegenden Erfindung, die Nachteile des Stands der Technik zu beseitigen.

Gelöst wird diese Aufgabe mit dem Gegenstand der unabhängigen Ansprüche. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen. In den angegebenen Wertebereichen sollen auch innerhalb der genannten Grenzen liegende Werte als Grenzwerte offenbart und in beliebiger Kombination beanspruchbar sein. Die Erfindung betrifft eine Schraube zur Herstellung eines elektrischen Kontakts mit einem Kontaktierungsmaterial, sich erstreckend zwischen einem Kopf und einem vorderen Ende entlang einer Längsachse, aufweisend:
- eine Scheibe, wobei die Scheibe am Kopf angeordnet ist, wobei die Scheibe eine dem Kopf zugewandte Seite und eine dem vorderen Ende zugewandte Seite aufweist,
- einen Schaft mit einem Gewinde, wobei sich der Schaft von der Scheibe bis zum vorderen Ende erstreckt,
wobei die Schraube weiterhin aufweist:
- einen Dichtring, wobei der Dichtring an der dem vorderen Ende zugewandten Seite der Scheibe angeordnet ist, und
- am Dichtring angeordnete Schneidelemente zur Durchtrennung eines isolierenden Materials.

Erfindungsgemäß ist es dadurch vorteilhaft möglich, einerseits durch den Dichtring eine Abdichtung des elektrischen Kontakts von beispielsweise Flüssigkeiten etc. zu erreichen. Außerdem ist es erfindungsgemäß vorteilhaft möglich, ein isolierendes Material zu durchtrennen, wodurch vorteilhaft ein verbesserter elektrischer Kontakt herstellbar ist. Vorteilhaft bleibt (bleiben?) durch die Kombination von Dichtring und Schneidelement eine verbesserte Dichtung und ein effizienter elektrischer Kontakt herstellbar.

In einer bevorzugten Ausführungsform ist es vorgesehen, dass die Schneidelemente als Erhebungen ausgebildet sind, wobei sich die Erhebungen in Längsrichtung vom Dichtring erheben. Eine Höhe eines der Schneidelemente beträgt bis zu 60 % einer Höhe des Dichtringes.

Dadurch ist es vorteilhaft möglich, dass einerseits die Dichtwirkung des Dichtringes bestmöglich erhalten bleibt und andererseits die Schneidwirkung der Schneidelemente und dadurch die elektrische Kontaktierung bestmöglich erreicht werden kann.

Gemäß einer anderen bevorzugten Ausführungsform ist es vorgesehen, dass die Schneidelemente in regelmäßigen Abständen angeordnet sind. Damit ist insbesondere gemeint, dass zwischen den Schneidelementen in radialer Richtung ein identischer Winkelabstand angeordnet ist.

Durch die regelmäßigen Abstände ist es vorteilhaft möglich, dass die Schneidwirkung und damit die Kraftübertragung gleichmäßig und effizient erfolgen kann.

In einer anderen bevorzugten Ausführungsform ist es vorgesehen, dass die Schneidelemente warzenförmig ausgebildet sind. Mit warzenförmig ist eine Ausbildung gemeint, bei der die Schneidelemente eine vergleichsweise geringe Grundfläche aufweisen, welche im Wesentlichen rund ausgebildet sein kann, wobei die Schneidelemente konisch oder spitz ausgebildet sein können.

In einer anderen bevorzugten Ausführungsform ist es vorgesehen, dass die Schneidelemente trapezförmig ausgebildet sind. Bei dieser Ausführungsform ist eine besonders gute Schneidwirkung erzeugbar.

In einer anderen bevorzugten Ausführungsform ist es vorgesehen, dass die Schneidelemente wellenförmig ausgebildet sind. Wellenförmig bedeutet, dass die Schneidelemente wellenförmig höher werden und nach einem Maximum wieder niedriger werden, so dass eine gleichmäßige Zunahme und Abnahme der Höhe der Schneidelemente erzeugt werden können.

Dadurch ist es vorteilhaft möglich, dass die Schneidwirkung nicht sprunghaft ansteigt, sondern gleichmäßig erhöht werden kann, wodurch eine besonders gute Schneidwirkung erzeugt werden kann.

In einer anderen bevorzugten Ausführungsform ist es vorgesehen, dass der Dichtring umlaufend ausgebildet ist. Damit ist gemeint, dass der Dichtring keine Unterbrechungen aufweist. In dieser Ausführungsform ist es vorteilhaft möglich, dass die Dichtwirkung des Dichtringes optimiert werden kann.

In einer anderen bevorzugten Ausführungsform ist es vorgesehen, dass die Scheibe fest mit dem Kopf verbunden ist. Damit ist gemeint, dass die Scheibe und der Kopf und die gesamte Schraube als ein einziges Bauteil ausgebildet sind. Dabei kann die Schraube mit dem Kopf und der Scheibe aus einem einzigen Material gefertigt sein, oder die Bauteile können durch andere Verfahren fest miteinander verbunden sein.

In einer alternativen Ausführungsform ist es vorgesehen, dass die Scheibe lösbar mit dem Kopf verbunden ist, wobei die Scheibe insbesondere als separates Bauteil ausgebildet ist. Hier ist es denkbar, dass der Kopf über Rastelemente oder dergleichen verfügt, die in korrespondierende Rastöffnungen in der Scheibe eingreifen und dadurch eine Verbindung herstellen. Dabei sind die Scheibe und der Kopf als separate Bauteile ausgebildet, die vor dem Verschrauben miteinander montiert werden müssen.

In einer anderen bevorzugten Ausführungsform ist es vorgesehen, dass eine Länge eines Winkels, über den sich eines der Schneidelemente in radialer Richtung erstreckt, mindestens 5° beträgt. Durch diese Mindestlänge des Winkels kann eine optimale Schneidwirkung durch die Schneidelemente erzeugt werden.

In einer anderen bevorzugten Ausführungsform ist es vorgesehen, dass bei einer Verschraubung die Schneidelemente verformbar sind, wodurch eine zusätzliche Kontaktierung herstellbar ist. Dadurch ist es vorteilhaft möglich, dass die Schneidelemente nicht nur für die Schneidwirkung verantwortlich sind, sondern auch eine zusätzliche Verbesserung der Kontaktierung herstellen können.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen jeweils in schematischer Ansicht:
Figur 1 zeigt schematisch eine Seitenansicht einer erfindungsgemäßen Schraube gemäß einer ersten Ausführungsform,
Figur 2 zeigt schematisch eine Seitenansicht einer Schraube gemäß einer zweiten Ausführungsform,
Figur 3 zeigt schematisch eine erfindungsgemäße Schraube gemäß einer dritten beispielhaften Ausführungsform,
Figur 4a zeigt schematisch die erste Ausführungsform in einer Querschnittsansicht, wobei die Schraube in einem Kontaktierungsmaterial mit einer Oberflächenbeschichtung befestigt ist,
Figur 4b zeigt einen Ausschnitt aus der Zeichnung 4a.

In den Figuren sind Vorteile und Merkmale der Erfindung mit diese jeweils identifizierenden Bezugszeichen gemäß Ausführungsformen der Erfindung gekennzeichnet, wobei Bauteile beziehungsweise Merkmale mit gleicher oder gleichwirkender Funktion mit identischen Bezugszeichen gekennzeichnet sind.

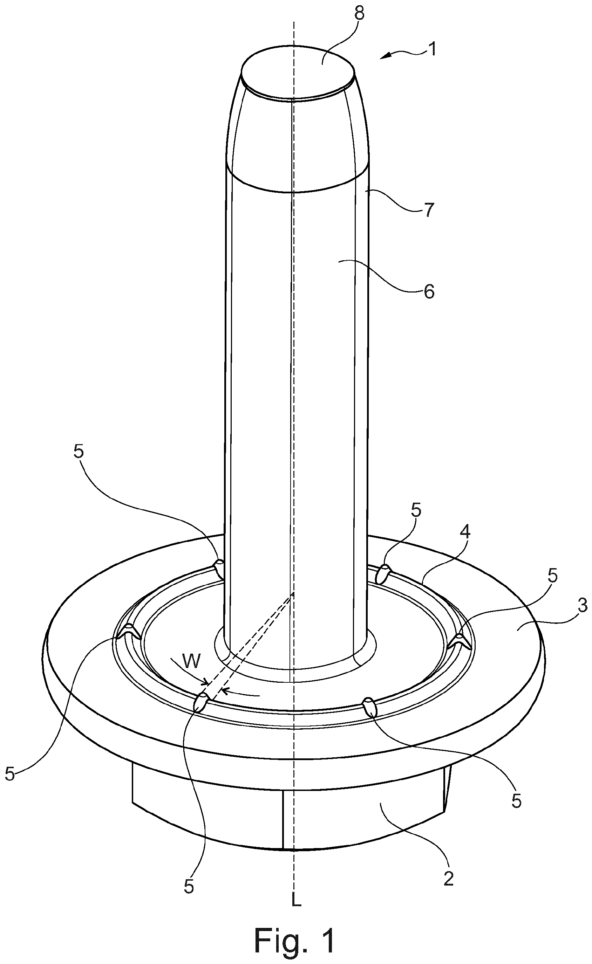

Figur 1 zeigt schematisch eine Schraube 1 in einer Seitenansicht gemäß einer ersten Ausführungsform.

Die Schraube 1 erstreckt sich entlang einer Längsachse L von einem Kopf 2 mit einem Kraftangriff bis hin zu einem vorderen Ende 8 bzw. einer Spitze 8. Die Spitze 8 ist in diesem Beispiel abgeflacht ausgebildet, sie kann alternativ spitz zulaufend ausgebildet sein.

Die Schraube 1 weist weiterhin einen Schaft 6 mit einem Gewinde 7 auf. Der Schaft 6 verjüngt sich im vorderen Teil bis hin zum vorderen Ende 8.

In Längsrichtung gesehen befindet sich am Kopf 2 eine Scheibe 3, welche vom Durchmesser her größer ausgebildet ist als der Kopf 2.

Die Scheibe 3 weist eine Dicke auf, welche in diesem Ausführungsbeispiel kleiner ausgebildet ist als die Dicke des Kopfes 2.

An einer Seite der Scheibe 3, die dem vorderen Ende 8 zugewandt ist, ist ein Dichtring 4 angeordnet.

Der Dichtring 4 weist eine Höhe auf, welche geringer ist als die Dicke der Scheibe 3. Der Dichtring 4 ist in diesem Ausführungsbeispiel in radialer Richtung vollständig umlaufend ausgebildet, was bedeutet, dass keine Lücken im Dichtring 4 vorhanden sind.

Die Scheibe 3 mit dem Dichtring 4 sind in Bezug auf die Längsachse L rotationssymmetrisch ausgebildet. Die Scheibe 3 ist als Kreiszylinderscheibe ausgebildet, der Dichtring 4 ist als Kreishohlring ausgebildet, welcher um die Längsachse L verläuft.

In dieser ersten Ausführungsform sind auf dem Dichtring 4 sechs äquidistant, also mit gleichem Abstand voneinander, angeordnete Schneidelemente 5 angeordnet, deren Höhe weniger als 60 % der Höhe des Dichtringes 4 beträgt.

Die Schneidelemente 5 sind in dieser Ausführungsform warzenförmig ausgebildet. Sie weisen eine im Wesentlichen runde Grundfläche auf und erstrecken sich konisch ausgebildet in Richtung ihres höchsten Punktes.

Die Schneidelemente 5 sind in einem Abstand von 60° abzüglich ihrer Winkellänge beabstandet voneinander ausgebildet, so dass sich in dieser Ausführungsform sechs Schneidelemente befinden.

Die Länge eines Winkels w, über den sich eines der Schneidelemente 5 in radialer Richtung erstreckt, beträgt mindestens 5°.

Die Schraube 1 wird in ein Kontaktierungsmaterial eingeschraubt und durchstößt eine Oberflächenschutzbeschichtung. Beim Einschrauben zerschneiden die Schneidelemente 5 die Oberflächenschutzbeschichtung und erzeugen so einen verbesserten elektrischen Kontakt. Der Dichtring 4 ermöglicht die Abdichtung der Kontaktierung von Flüssigkeit und so weiter.

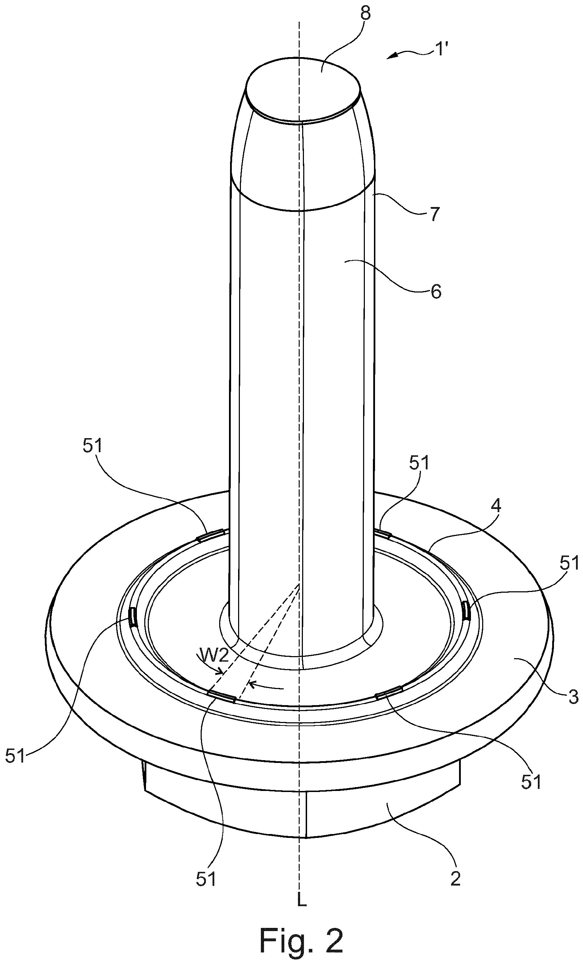

Figur 2 zeigt eine erfindungsgemäße Ausführungsform einer Schraube 1' gemäß einer zweiten Ausführungsform.

Im Wesentlichen gelten die Ausführungen zu den Merkmalen der Schraube 1', die in der ersten Ausführungsform beschrieben worden sind. Zur Vermeidung von Wiederholung wird daher auf die erneute Beschreibung verzichtet.

Im Unterschied zur ersten Ausführungsform weist diese zweite Ausführungsform sechs trapezförmige Schneidelemente 51 auf. Diese trapezförmigen Schneidelemente 51 sind im Querschnitt im Wesentlichen trapezförmig ausgebildet. Die Schneidelemente 51 erstrecken sich über eine Länge eines Winkels w2 in radialer Richtung auf den Dichtring 4.

In dieser Ausführungsform sind die Schneidelemente 51 im gleichen Abstand voneinander angeordnet.

Die Schneidelemente 51 erstrecken sich über eine Länge L des Winkels w2 von mindestens 5°.

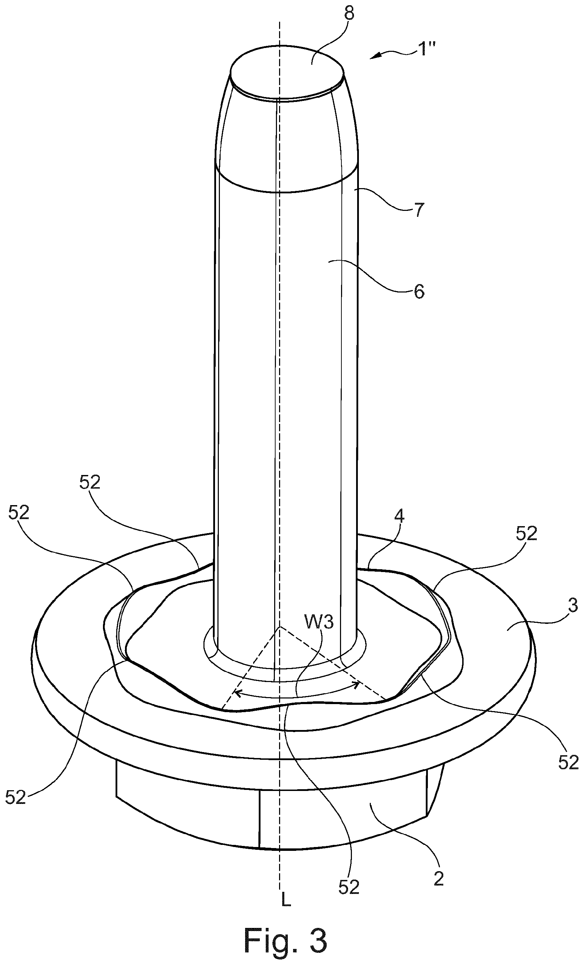

Figur 3 zeigt eine Schraube 1" gemäß einer dritten erfindungsgemäßen Ausführungsform in einer Seitenansicht.

Zu den grundsätzlichen Merkmalen wird auf die Ausführungsformen zur ersten Ausführungsform verwiesen. Im Unterschied weist diese dritte Ausführungsform sechs wellenförmige Schneidelemente 52 auf. Diese wellenförmigen Schneidelemente 52 sind gleichmäßig voneinander auf dem Dichtring 4 angeordnet. Wellenförmig bedeutet, dass die Höhe der Schneidelemente 52 gleichmäßig ansteigt und nach einer maximalen Höhe gleichmäßig wieder abnimmt.

Die Maxima der Schneidelemente 52, die benachbart sind, sind in einem Winkel w3 voneinander beabstandet. In diesem Fall, bei sechs wellenförmigen Schneidelementen 52, beträgt der Abstand zwischen benachbarten Schneidelementen 52 60°.

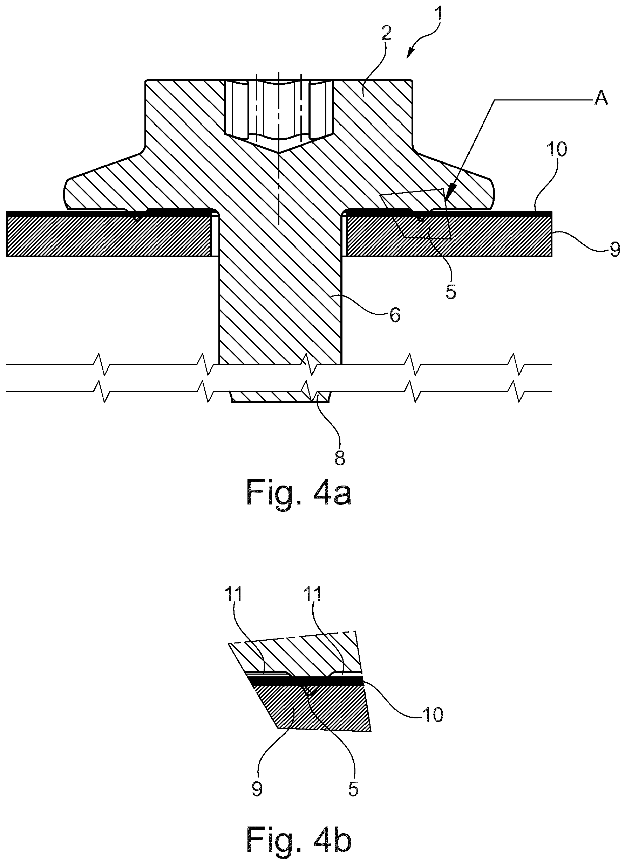

Figur 4a zeigt schematisch eine Querschnittsansicht der Schraube 1 gemäß der ersten Ausführungsform in einem Verbund mit einem Kontaktierungsmaterial 9 mit einer Oberflächenschutzbeschichtung 10. Die Schneidelemente 5 durchtrennen die Oberflächenschutzbeschichtung 10 und sorgen dadurch für eine Kontaktierung der Schraube mit dem Kontaktierungsmaterial 9.

Figur 4b zeigt den Ausschnitt A aus der Figur 4a. Hier ist noch besser zu erkennen, dass die Schneidelemente 5 den Kontakt mit dem Kontaktierungsmaterial 9 durch Aufschneiden der Oberflächenschutzbeschichtung 10 herstellen. Weiterhin ergibt sich zwischen der Schraube und der Oberflächenschutzbeschichtung Raum für eventuell einzubringende Dichtmassen beziehungsweise Dichtelemente.

Die zuvor beschriebenen Ausführungsformen dienen lediglich der Illustration der Erfindung und schränken den grundsätzlichen Erfindungsgedanken in keiner Form ein.

### Bezugszeichenliste

- 1,1',1": Schraube
- 2: Kopf
- 3: Scheibe
- 4: Dichtring
- 5,51,52: Schneidelemente
- 6: Schaft
- 7: Gewinde
- 8: Vorderes Ende/Spitze
- 9: Kontaktierungsmaterial
- 10: Oberflächenschutzbeschichtung
- 11: Bereich für Dichtmassen/Dichtelemente
- A: Ausschnitt
- L: Längsachse
- w,w2,w3: Winkel

## Patentansprüche

1. Schraube (1,1',1") zur Herstellung eines elektrischen Kontakts mit einem Kontaktierungsmaterial (9), sich erstreckend zwischen einem Kopf (2) und einem vorderen Ende (8) entlang einer Längsachse (L), aufweisend:
- eine Scheibe (3), wobei die Scheibe (3) am Kopf angeordnet ist, wobei die Scheibe eine dem Kopf (2) zugewandte Seite und eine dem vorderen Ende (8) zugewandte Seite aufweist,
- einen Schaft (6) mit einem Gewinde (7), wobei sich der Schaft (6) von der Scheibe (3) bis zum vorderen Ende (8) erstreckt,
**dadurch gekennzeichnet, dass** die Schraube (1,1`,1") weiterhin aufweist:
- einen Dichtring (4), wobei der Dichtring (4) an der dem vorderen Ende (8) zugewandten Seite der Scheibe (2) angeordnet ist, und
- am Dichtring (4) angeordnete Schneidelemente (5,51,52) zur Durchtrennung eines isolierenden Materials (10).

2. Schraube (1,1',1") nach Anspruch 1, wobei die Schneidelemente (5,51,52) als Erhebungen ausgebildet sind, wobei sich die Erhebungen in Längsrichtung (L) vom Dichtring (4) erheben, wobei eine Höhe eines der Schneidelemente (5,51,52) bis zu 60% einer Höhe des Dichtringes (4) beträgt.

3. Schraube (1,1',1") gemäß mindestens einem der vorhergehenden Ansprüche, wobei die Schneidelemente (5,51,52) in regelmäßigen Abständen angeordnet sind.

4. Schraube (1,1',1") gemäß mindestens einem der vorhergehenden Ansprüche, wobei die Schneidelemente (5) warzenfömig ausgebildet sind.

5. Schraube (1,1',1") gemäß mindestens einem der vorhergehenden Ansprüche, wobei die Schneidelemente (51) trapezförmig ausgebildet sind.

6. Schraube (1,1',1") gemäß mindestens einem der vorhergehenden Ansprüche, wobei die Schneidelemente (52) wellenförmig ausgebildet sind.

7. Schraube (1,1',1") gemäß mindestens einem der vorhergehenden Ansprüche, wobei der Dichtring (4) umlaufend ausgebildet ist.

8. Schraube (1,1',1") gemäß mindestens einem der vorhergehenden Ansprüche, wobei die Scheibe (3) fest mit dem Kopf (2) verbunden ist.

9. Schraube (1,1',1") gemäß mindestens einem der vorhergehenden Ansprüche, wobei die Scheibe (3) lösbar mit dem Kopf (2) verbunden ist, wobei die Scheibe (3) insbesondere als separates Bauteil ausgebildet ist.

10. Schraube (1,1',1") gemäß mindestens einem der vorhergehenden Ansprüche, wobei eine Länge eines Winkels (w,w2,w3), über den sich eines der Schneidelemente (5,51,52) in radialer Richtung erstreckt, mindestens 5° beträgt.

11. Schraube (1,1',1") gemäß mindestens einem der vorhergehenden Ansprüche, wobei bei einer Verschraubung die Schneidelemente (5,51,52) verformbar sind, wodurch eine zusätzliche Kontaktierung herstellbar ist.
